# EUROPEAN PATENT SPECIFICATION

(11) **EP 2 144 175 B1**
(45) Date of publication and mention of the grant of the patent: **28.09.2016**
(21) Application number: 08014524.6
(22) Date of filing: 14.08.2008
(51) Int. Cl.: G06F 17/30

(54) **Method for performing a bulk load into a database**
Verfahren zur Durchführung einer Massenspeicherung in eine Datenbank
Procédé pour effectuer un chargement volumineux dans une base de données

(30) Priority: 11.07.2008 EP 08012590
(43) Date of publication of application: 13.01.2010
(73) Proprietor: Software AG, 64297 Darmstadt (DE)
(72) Inventor: Schmidt, Andreas, 63762 Grossostheim (DE); Schöning, Harald, 64807 Dieburg (DE); Obmann, Wolfgang, 64293 Darmstadt (DE)
(74) Representative: Wegner, Hans

(56) References cited:
- US-B2- 7 266 539
- "Data Movement Utilities Guide and Reference Updated March, 2008 (excerpt)" IBM DB2 VERSION 9.5 FOR LINUX, UNIX, AND WINDOWS MANUAL, [Online] March 2008 (2008-03), XP002504822 INTERNET Retrieved from the Internet: URL:ftp://ftp.software.ibm.com/ps/products /db2/info/vr95/pdf/en_US/db2dme951.pdf> [retrieved on 2008-11-20]
- ANONYMOUS: "IBM DB2 VERSION 9.5 FOR LINUX, UNIX, AND WINDOWS ENGLISH MANUALS" IBM SOFTWARE DOCUMENTATION, [Online] 20 November 2008 (2008-11-20), pages 1-3, XP002504823 INTERNET Retrieved from the Internet: URL:http://www-01.ibm.com/support/docview. wss?rs=71&context=SSEPGG&context=SSEPDU&co ntext=SSVGXH&context=SSVGZB&context=SSYK8P &context=SSTLZ9&dc=DA410&uid=swg27009727&l oc=en_US&cs=utf-8&lang=en> [retrieved on 2008-11-20]
- CHAMBERLIN D: "A complete guide to DB2 universal database" 2000, COMPLETE GUIDE TO DB2 UNIVERSAL DATABASE, EXCERPT: BNS PAGES 1-35 , XP002239913 * page 649, paragraph 2 - page 652, paragraph 3 *
- SWONGER, R. F. ET AL: "Oracle Data Pump in Oracle Database 11g: Foundation for Ultra High-Speed Data Movement Utilities" AN ORACLE WHITE PAPER, [Online] July 2007 (2007-07), pages 1-16, XP002504824 INTERNET Retrieved from the Internet: URL:http://www.oracle.com/technology/produ cts/database/utilities/pdf/datapump11g2007 _techover.pdf> [retrieved on 2008-11-14]
- DURBIN J ET AL: "SQL*Loader Concepts" INTERNET CITATION, [Online] XP002269379 Retrieved from the Internet: URL:http://otn.oracle.co.kr/docs/oracle78/ server.804/a58244/ch03.htm> [retrieved on 2004-02-06]

## Description

### FIELD OF THE INVENTION

The present invention relates to a method for performing a bulk load into a database.

### DESCRIPTION OF RELATED ART

Databases are nowadays a common technical tool for managing large amounts of data. Due to the increasing complexity of databases the efficiency and reliability of databases are of eminent importance. An unexpected crash or inconsistency in a database can result in enormous losses not only because of the time necessary to restore the database from a backup, but in the worst case also in the loss of data.

A typical database from the state of the art comprises one or more storages for the actual data of the database together with one or more indexes to speed up data access. The storage and the indexes can be organized in various ways, depending on the application and the database, e.g. the database can be a relational database.

The database typically contains a plurality of data partitions. These partitions can be derived from the structure of the database, e. g. all data sets concerning costumers or all data sets from a specific time period. In relational databases a data partition can correspond to one or more tables or to a specific part of a table. For certain database types, a data partition can correspond to one or more files. Each data partition also contains an index which covers the data of the data partition.

Since the database is stored on a storage device, which could be a hard disk, a remote or distributed storage device, the location of the data of a data partition and the location of the index of this data partition are stored, e. g. in a file control block (FCB) or file allocation table (FAT). In what follows, we will use the term file control block or FCB for all these variants. The data as well as the index or indexes can be distributed over a storage device, so that the file control block can include a plurality of locations for different indexes as well as for different parts of the data of the data partition.

A very important issue for every database is the handling of bulk loads. These are loads, where a massive amount of data entries in a batch-like process is added to the database. Such bulk loads, although they often contain many very similar sets of data, e. g. addresses of new customers, can cause serious problems for the database in terms of data consistency or performance.

### DESCRIPTION OF PRIOR ART

Databases from the prior art offer two modes for performing a bulk load:
Transactional: In this case each data entry has to be processed through the normal Database Manipulation Language (DML) interface of the database, causing an entry in the transaction log. This ensures the consistency of the database even in case of an interruption of the bulk load process. However, it makes the insertion process very slow. Additionally other problems can arise with very large amounts of data and the number of insertions, e.g. overflow of the transaction log.
Non-transactional: In this case each data entry is processed by the DML interface or by an internal interface, but the transactional logging of the database is turned off. This makes the bulk load process much faster. However, in case of a failure, like power outage or crash of the load process, the whole database might remain in a corrupted state and has to undergo a repair process, e.g. by applying a backup. Additionally the data partition affected by the load process is typically not accessible while the bulk load is performed.

Furthermore, the document *"Data Movement Utilities Guide and Reference"* of IBM Corp. discloses a "Load Utility" for IBM's database DB2 that serves for moving large quantities of data into database tables. The load process consists of four distinct phases: Load, Build, Delete and Index Copy. During the Load phase, data is loaded into the table, i.e. the load utility writes formatted pages directly into the database. Further, read access is provided throughout the load operation except for two instances: at the beginning and at the end of the load operation. This is because the load utility acquires special Z-locks near the end of its setup phase and before data is committed. These Z-locks are exclusive locks, i.e. no other process has access to the database table during these phases, neither for writing nor for reading data.

The US 7,266,539 B2 discloses a method for managing attribute-tagged index entries and does not concern bulk loads into a database. The document *"A complete Guide to DB2 universal database"* of D. Chamberlin also concerns IBM's database DB2 and discloses that in order to insert pages into the database, the Load utility must obtain exclusive access to the tablespace(s) being loaded. The document *"Oracle Data Pump in Oracle Database 11g: Foundation for Ultra High-Speed Data Movement Utilities"* of R. F. Swonger et al. gives an overview over Oracle's database 11g. The document *"SQL*Loader Concepts"* of J. Durbin et al. describes basic concepts of loading data into an Oracle database with SQL*Loader.

### BRIEF SUMMARY OF THE INVENTION

It is, therefore, an object of the present invention to provide an improved way for performing a bulk load into a database.

This aim is achieved by the invention as claimed in the independent claim. Advantageous embodiments are described in the dependent claims. Even if no multiple back-referenced claims are drawn, all reasonable combinations of the features in the claims shall be disclosed.

The object of the invention is i.a. achieved by a method. In what follows, individual steps of a method will be described in more detail. The steps do not necessarily have to be performed in the order given in the text. Also, further steps not explicitly stated may be part of the method.

In one aspect of the invention the problem is solved by a method for performing a bulk load into a database in accordance with claim 1. During such a bulk load new data are added to a data partition of the database, which contains old data and a corresponding index. The database is stored in a storage device and contains a file control block for each data partition which includes the storage location of the index and the data in the storage device.

The method of the invention comprises the following steps:
First a new data area is allocated on the storage device for the new data of the bulk load. The data partition, which is affected by the addition of the new data, is locked for writing for all other processes than the bulk load process. Preferably the data of the bulk load determine the data partition which is locked for writing. This assures that no changes occur while the bulk load is performed. The data partition remains readable for other processes. All parallel database processes can still access the data on the data partition and the corresponding (old) index.

The new data area is preferably locked for reading for other processes than the bulk load process or processes related to the method of the invention.

The new data are transformed into a format of the partition. It may be necessary to check the data for constraints during the transformation.

Then the transformed new data are stored in the new data area. The new data is preferably written into the new data area through an internal interface of the database, bypassing the standard DML interface. The insertions of the individual entries of the bulk load are therefore not logged in the transaction log. As.a result this data transfer is very fast. Since the new data area is not accessible for normal database processes the transfer does not lead to any change in the active data. A failure during this transfer can therefore not lead to any corruption in the database although the inserts are not logged.

Preferably the data are transformed into the internal format prior to locking the data partition in order to minimize the time of locking of the old data. This reduces the time the data partition is locked for writing.

After and / or parallel to the transfer of the new data a new index is built, which in contrast to the active index of the data partition covers the old data and the new data.

A new file control block is built which includes the storage locations of the new index and the old and new data in the storage device. The active file control block is then replaced by the new file control block. This is preferably done in a way that does not affect readers on this data partition. This makes the new data visible and accessible for all database processes. Preferably this replacement of the file control block is logged in the transaction log of the database. Finally, all locks on the data partition are removed. The space occupied by the old index is released.

The proposed method has several advantages over the methods known from the prior art. Since the bulk load is first transferred to a separate data area, the content of which is not part of the active database, a failure during the bulk load will not affect the consistency of the database. In case of failure, the new data area and the new index can just be discarded without any negative consequences. Using the method of the invention the database is not corrupted when the bulk load fails after starting to modify the database.

Since the new data are added in a non-transactional manner to the new data area, the method can be as fast as the non-transactional method of the prior art.

The data partition affected by the bulk load remains accessible for reading. This also has a positive effect on the availability of the database.

The new data are appended to the database in the last step, after all other operations like transferring the data and building the new index, have been completed. Therefore, the addition of the data can be performed smoothly, preferably in the background without affecting the performance of the database.

In another aspect of the invention transaction logging can remain turned on while the bulk load is performed. Since most of the steps are performed through the internal database interface these transactions are not logged in the transaction log, e.g. the insertions of the individual entries of the bulk load. Only the start and successful completion of the bulk load as well as the exchange of the file control block should be recorded in the transaction log.

In another aspect of the invention a bulk load can be divided into several bulk loads, each performed by repeating the method of the invention several times. This minimizes the size of the data partition affected by the each bulk load.

Furthermore, the object of the invention is achieved by - a computer program, wherein the computer program is adapted to perform the method according to one of the embodiments described in this description while the program is being executed on a computer;

### BRIEF DESCRIPTION OF THE DRAWINGS

Other objects and advantages of the present invention may be ascertained from a reading of the specification and appended claims in conjunction with the drawings therein.

For a more complete understanding of the present invention, reference is established to the following description made in connection with accompanying drawings in which:
- Fig. 1: shows a schematic view of all components in a preferred embodiment;
- Fig. 2A: shows the step of storing of the bulk load data in the new data area;
- Fig. 2B: shows the steps of building a new index and a new file control block; and
- Fig. 2C: shows the step of replacing the file control block.

### DETAILED DESCRIPTION OF THE INVENTION

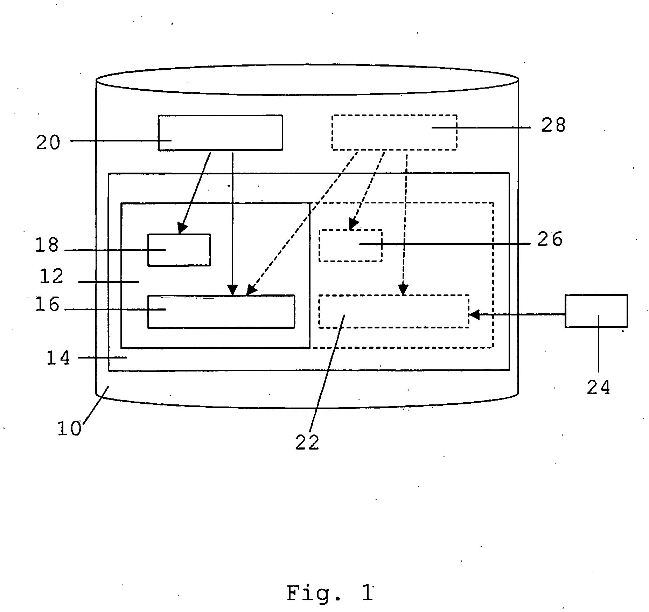

Fig. 1 shows a schematic view of a database 10, which comprises at least one data partition 12 and is stored on a storage device 14. The data partition 12 contains data 16 as well as a corresponding index 18. The storage locations of the data 16 and the index 18 are stored in a file control block 20. Since the data 16 and the index 18 can be stored in several locations distributed over one or more storage devices, the file control block 20 may contain several locations and is preferably also extendable if more locations have to be added.

Before performing the bulk load a new data area 22 is allocated on the storage device 14. The bulk load, resp. the bulk load data 24 are transferred to this new data area 22. The new data are then appended to the database by building a new index 26 which covers the old data 16 and the new data 22. Additionally, a new file control block 28 is built covering the old and new data 16, 22 and the new index 26. Finally, the old file control block 20 is replaced by the newly built file control block 28 which contains the storage locations for the index 26, the old data 16 and the new data 22.

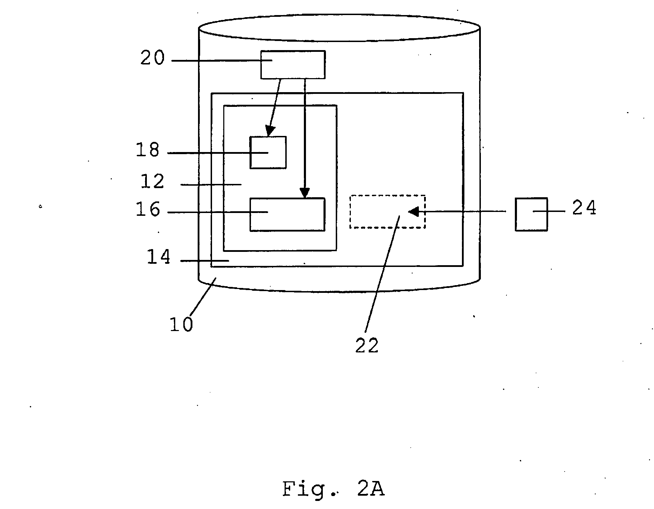

Fig. 2A to Fig. 2C show a schematic representation, in which different steps of the method according to the invention are depicted in detail.

In the first step (Fig. 2A) a new data area 22 is allocated on the storage device 14 of the database 10. Then the data partition 12 affected by the bulk load data 24 is locked for writing. The data partition can be determined by the data of.the bulk load, e.g. if the bulk load consists of addresses the data partition would be the table of addresses.

The data of the bulk load 24 is then transformed into a format of the data partition and stored in the new data area 22. It is preferred that the data of the bulk load 24 is checked for constraints and validated before the data is stored. The data is preferably transferred through the internal interface of the database. These inserts are not recorded in the transaction log of the database.

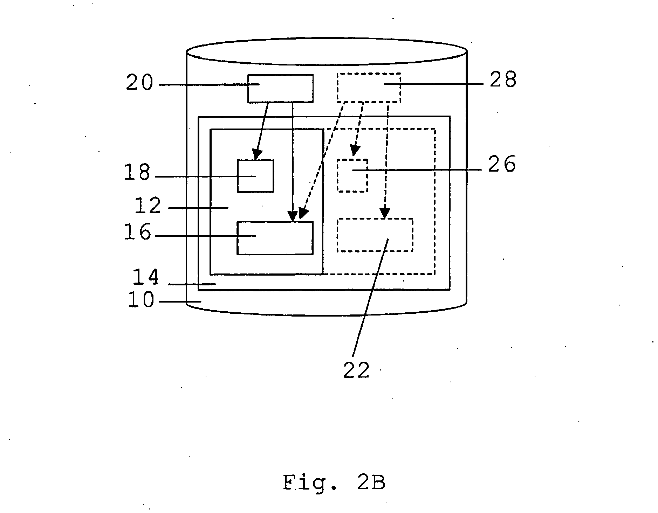

In parallel to or after, preferably in parallel to, the writing process, a new index 26 covering the old data 16 in the data partition 12 and the new data 22 is built (Fig. 2B).

A new file control block 28 is built, which covers the storage locations of the new index 26 and the old data 16 and the new data 22.

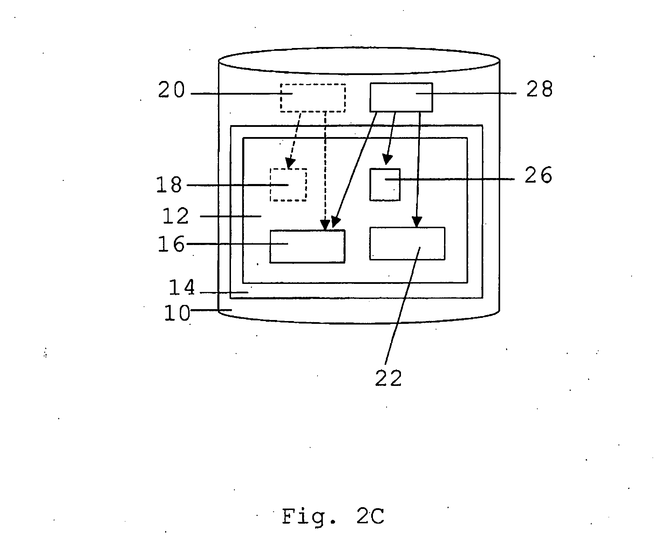

After all data have been processed, the new data have to be appended to the database (Fig. 2C). This is done by replacing the old file control block 20 by the new file control block 28. Depending on the organisation of the database this can be done by overwriting the file control block.

Accesses to the database 10 can then also reach the new data 22. This reduces the critical time span, in which the active data of the database is modified to an absolute minimum.

Finally all locks to the data partition are removed and the space for the old index 18 is deallocated.

### References

- 10: database
- 12: data partition
- 14: storage device
- 16: old data
- 18: index
- 20: file control block
- 22: new data (area)
- 24: bulk load (data)
- 26: new index
- 28: new file control block

## Claims

1. A method for performing a bulk load into a database (10),
wherein during the bulk load new data (24) are to be loaded into a data partition of the database (10),
wherein the data partition (12) contains old data (16) and a corresponding index (18) for the old data; and
wherein the database (10) is stored in a storage device (14);
wherein the database contains a file control block (20) for each data partition which includes the storage location of the index (18) and the data (16) of the partition in the storage device (14);
comprising the steps of:
a. allocating a new data area (22) on the storage device (14) for the new data, wherein the new data area is locked for reading for other processes than the bulk load process;
b. locking the data partition (12) for writing for all other processes than the bulk load process but allowing read accesses, so that it is assured that no changes occur to the partition while the bulk load is performed and so that the data partition (12) remains readable for the other processes;
c. transforming the new data (24) into a format of the data partition;
d. storing the transformed new data (24) in the new data area (22);
e. building a new index (26) for the data partition (12), wherein the new index (26) covers the old data (16) and the new data (22);
f. building a new file control block (28) which includes the storage location of the new index (26) and the old (16) and new data (22) in the storage device (14);
g. making the new data (24) visible and accessible for all database processes by replacing the file control block (20) by the new file control block (28) in a way that does not affect read accesses on the data partition (12); and
h. unlocking the data partition (12).

2. The method according to claim 1, wherein transaction logging for the database is turned on during performing the bulk load but excludes the insertions of individual entries of the bulk load.

3. The method according to claim 1, wherein step c. is performed prior to step b.

4. A computer program, wherein the computer program is adapted to perform the method according to claim 1 while the computer program is being executed on a computer.

## Patentansprüche

1. Ein Verfahren zur Durchführung einer Massenspeicherung in eine Datenbank (10),
wobei während der Massenspeicherung neue Daten (24) in eine Datenpartition der Datenbank (10) geladen werden sollen,
wobei die Datenpartition (12) alte Daten (16) und einen entsprechenden Index (18) für die alten Daten aufweist; und
wobei die Datenbank (10) in einer Speichervorrichtung (14) gespeichert ist; wobei die Datenbank einen Dateisteuerblock (20) für jede Datenpartition aufweist, die einen Speicherort für den Index (18) und die Daten (16) der Partition in der Speichervorrichtung (14) aufweist, die folgen Schritte umfassend:
a. Allokieren eines neuen Datenbereichs (22) in der Speichervorrichtung (14) für die neuen Daten, wobei der neue Datenbereich für andere Prozesse als den Massenspeicherungsprozess zum Lesen gesperrt ist;
b. Sperren der Datenpartition (12) zum Schreiben für alle anderen Prozesse als den Massenspeicherungsprozess, aber Zulassen von Lesezugriffen, sodass es gesichert ist, dass keine Änderungen an der Partition auftreten während der Massenspeicherungsprozess durchgeführt wird und sodass die Datenpartition (12) für andere Prozesse lesbar bleibt;
c. Transformieren der neuen Daten (24) in ein Format der Datenpartition;
d. Speichern der transformierten neuen Daten (24) in dem neuen Datenbereich (22);
e. Erstellen eines neuen Indexes (26) für die Datenpartition (12), wobei der neue Index (26) die alten Daten (16) und die neuen Daten (22) abdeckt;
f. Erstellen eines neuen Dateisteuerblocks (28), der den Speicherort des neuen Indexes (26) und die alten (16) und die neuen Daten (22) in der Speichervorrichtung (14) umfasst;
g. Sichtbar und zugreifbar machen der neuen Daten (24) für alle Datenbankprozesse durch Austauschen des Dateisteuerblocks (20) durch den neuen Dateisteuerblock (28) derart, dass Lesezugriffe auf die Datenpartition (12) nicht beeinträchtigt werden; und
h. Entsperren der Datenpartition (12).

2. Verfahren gemäß Anspruch 1, wobei während der Durchführung der Massenspeicherung eine Transaktionsaufzeichnung für die Datenbank eingeschaltet ist, das Einfügen von individuellen Einträgen der Massenspeicherung jedoch ausgenommen ist.

3. Verfahren gemäß Anspruch 1, wobei Schritt c. vor Schritt b. ausgeführt wird.

4. Ein Computerprogramm, wobei das Computerprogramm ausgelegt ist um das Verfahren gemäß Anspruch 1 auszuführen, während das Computerprogramm von einem Computer ausgeführt wird.

## Revendications

1. Procédé pour effectuer un chargement volumineux dans une base de données (10),
dans lequel, durant le chargement volumineux, de nouvelles données (24) doivent être chargées dans une partition de données de la base de données (10),
dans lequel la partition de données (12) contient des données anciennes (16) et un indice correspondant (18) pour les données anciennes ; et
dans lequel la base de données (10) est stockée dans un dispositif de stockage (14) ;
dans lequel la base de données contient un bloc de commande de fichier (20) pour chaque partition de données qui comporte l'emplacement de stockage de l'indice (18) et les données (16) de la partition dans le dispositif de stockage (14) ;
comprenant les étapes suivantes :
a. l'attribution d'une zone de nouvelles données (22) sur le dispositif de stockage (14) pour les nouvelles données, dans lequel la zone de nouvelles données est verrouillée en lecture pour des processus autres que le processus de chargement volumineux ;
b. le verrouillage de la partition de données (12) en écriture pour tous les processus autres que le processus de chargement volumineux mais en ayant l'autorisation d'accès en écriture de sorte qu'il est assuré qu'aucun changement ne survient à la partition pendant que le chargement volumineux est exécuté et de sorte que la partition de données (12) reste lisible pour les autres processus ;
c. la transformation des nouvelles données (24) en un format de la partition de données ;
d. le stockage des nouvelles données transformées (24) dans la zone de nouvelles données (22) ;
e. la création d'un nouvel indice (26) pour la partition de données (12), dans lequel le nouvel indice (26) couvre les données anciennes (16) et les nouvelles données (22) ;
f. la création d'un nouveau bloc de commande de fichier (28) qui comporte l'emplacement de stockage du nouvel indice (26) et des anciennes (16) et nouvelles données (22) dans le dispositif de stockage (14) ;
g. le rendu des nouvelles données (24) visibles et accessibles pour tous les processus de base de données par remplacement du bloc de commande de fichier (20) par le nouveau bloc de commande de fichier (28) d'une manière qui n'affecte pas des accès en lecture à la partition de données (12) ; et
h. le déverrouillage de la partition de données (12).

2. Procédé selon la revendication 1, dans lequel une journalisation des transactions pour la base de données est activée durant l'exécution du chargement volumineux mais exclut les insertions d'entrées individuelles du chargement volumineux.

3. Procédé selon la revendication 1, dans lequel l'étape c. est réalisée avant l'étape b.

4. Un programme d'ordinateur, dans lequel le programme d'ordinateur est adapté pour exécuter le procédé selon la revendication 1 pendant que le programme d'ordinateur est en cours d'exécution sur un ordinateur.
